# FASCICULE DE BREVET EUROPEEN

(11) **EP 3 347 976 B1**
(45) Date de publication et mention de la délivrance du brevet: **23.10.2019**
(21) Numéro de dépôt: 16767334.2
(22) Date de dépôt: 07.09.2016
(51) Int. Cl.: H02K 21/16, H02K 1/14

(54) **STATOR DE MACHINE ELECTRIQUE TOURNANTE A TAUX DE REMPLISSAGE OPTIMISE**
STATOR EINER ELEKTRISCHEN ROTATIONSMASCHINE MIT OPTIMIERTEM FÜLLGRAD
STATOR OF A ROTARY ELECTRIC MACHINE WITH OPTIMISED FILLING RATIO

(30) Priorité: 11.09.2015 FR 1558469
(43) Date de publication de la demande: 18.07.2018
(73) Titulaire: Valeo Equipements Electriques Moteur, 94046 Créteil Cedex (FR)
(72) Inventeur: WALME, Benoit, 94046 Créteil Cedex (FR); RAKOTOVAO, Mamy, 94046 Créteil Cedex (FR); PISAREK, Rafal, 43500 Czechhowice (PL)
(86) Numéro de dépôt international: PCT/FR2016/052226
(87) Numéro de publication internationale: WO 2017/042484

(56) Documents cités:
- EP-A1- 0 642 210
- EP-A2- 1 089 417
- EP-A2- 1 602 554
- WO-A2-2012/072754
- CN-Y- 201 113 577
- US-A1- 2003 006 663
- US-A1- 2010 283 349

## Description

L'invention porte sur un stator de machine électrique tournante à taux de remplissage optimisé. L'invention trouve une application particulièrement avantageuse, mais non exclusive, avec les compresseurs électriques de véhicule automobile.

De façon connue en soi, les machines électriques tournantes comportent un stator et un rotor solidaire d'un arbre. Le rotor peut être solidaire d'un arbre menant et/ou mené et peut appartenir à une machine électrique tournante sous la forme d'un alternateur, d'un moteur électrique, ou d'une machine réversible pouvant fonctionner dans les deux modes.

Le rotor comporte un corps formé par un empilage de feuilles de tôles maintenues sous forme de paquet au moyen d'un système de fixation adapté. Le rotor comporte des pôles formés par des aimants permanents logés dans des cavités ménagées dans le corps de rotor.

Par ailleurs, le stator est monté dans un carter configuré pour porter à rotation l'arbre par exemple par l'intermédiaire de roulements. Le stator comporte un corps constitué par un empilage de tôles minces formant une culasse en forme de couronne dont la face intérieure est pourvue d'encoches ouvertes vers l'intérieur pour recevoir des enroulements de phase.

Dans un bobinage de type ondulé réparti, les enroulements sont obtenus par exemple à partir d'un fil continu recouvert d'émail ou à partir d'éléments conducteurs en forme d'épingles reliées entre elles par soudage. Alternativement, dans un bobinage de type "concentrique" dit aussi "concentré", les enroulements de phase sont constitués par des bobines fermées sur elles-mêmes qui sont enroulées autour des dents du stator. Ces enroulements sont des enroulements polyphasés connectés en étoile ou en triangle dont les sorties sont reliées à une électronique de commande.

On connaît les documents EP1089417A2 et EP1602554A2 qui décrivent un stator de machine électrique tournante.

On connaît des machines électriques tournantes accouplées à un arbre d'un compresseur électrique. Ce compresseur électrique permet de compenser au moins en partie la perte de puissance des moteurs thermiques de cylindrée réduite utilisés sur de nombreux véhicules automobiles pour en diminuer la consommation et les émissions de particules polluantes (principe dit de "downsizing" an anglais). A cet effet, le compresseur électrique comprend une turbine disposée sur le conduit d'admission en amont ou en aval du moteur thermique pour permettre de comprimer l'air afin d'optimiser le remplissage des cylindres du moteur thermique. La machine électrique est activée pour entraîner la turbine afin de minimiser le temps de réponse en couple, notamment lors des phases transitoires à l'accélération, ou en phase de redémarrage automatique du moteur thermique après une mise en veille (fonctionnement "stop and start" en anglais).

Toutefois, compte tenu des faibles dimensions de la machine électrique et des performances élevées requises, il est difficile de dimensionner de façon optimale les différents éléments, en particulier le corps du stator et le fil de bobinage correspondant afin d'obtenir un taux de remplissage optimal des encoches.

La présente invention vise notamment à remédier à cette difficulté en proposant un stator de machine électrique tournante, notamment destinée à un compresseur électrique pour véhicule automobile, ledit stator comportant:
- un corps ayant :
   - une culasse,
   - une pluralité de dents réparties angulairement sur une périphérie interne de ladite culasse, deux dents adjacentes définissant entre elles une encoche, et
- un bobinage comportant une pluralité de bobines, chaque bobine étant formée par un fil enroulé autour d'une dent,
caractérisé en ce qu'un ratio entre un diamètre d'une portion conductrice dudit fil et un diamètre interne dudit stator, est compris entre 5 et 10%, notamment entre 5 et 7%.

L'invention permet ainsi d'obtenir un compromis optimal entre l'inertie de la machine électrique et le taux de remplissage des encoches du stator.

Le ratio entre un diamètre d'une portion conductrice du fil et un diamètre interne du stator peut être compris entre 5,2% et 6,3%.

Selon une réalisation, ledit ratio est sensiblement égal à 5,4%.

Selon une réalisation, ledit diamètre de ladite portion conductrice dudit fil est compris entre 1mm et 2mm. Avec la couche d'émail, le diamètre du fil est de 1,602mm. Le choix du diamètre du fil est un choix important pour assurer la faisabilité d'un bobinage de type concentrique. Par ailleurs, le choix du diamètre intérieur du stator est guidé par la minimisation de l'inertie (ou la maximisation de 1/inertie qui est optimal lorsque ce ratio est proche de 1, ainsi que par la faisabilité du bobinage. En effet, plus le diamètre intérieur stator augmente, plus le diamètre extérieur rotor augmente, plus l'inertie augmente.

Selon une réalisation, ledit diamètre interne dudit stator est de l'ordre de 26.8mm.

Selon une réalisation, chaque encoche présente un taux de remplissage de l'ordre de:
- 50% lorsque ledit taux est calculé suivant une première méthode de calcul dans laquelle on détermine un rapport entre la surface totale cumulée de conducteur y compris sa couche isolante et une surface totale de l'encoche avec déduction d'un espace occupé par un isolant d'encoche, ou
- 73% lorsque ledit taux est calculé suivant une deuxième méthode de calcul correspondant à la première méthode sauf que l'on déduit de la surface de section d'encoche, la surface d'une section pour le passage d'une aiguille de bobinage.

Selon une réalisation, ledit bobinage est du type « in situ ».

Selon une réalisation, un ratio entre un diamètre d'une portion conductrice dudit fil non émaillé, exprimé en mm, et un nombre de spires de chaque bobine est compris entre 5% et 25 %, notamment entre 10% et 20%. Cela permet d'optimiser les performances magnétiques de la machine électrique tout en facilitant l'insertion de l'aiguille de bobinage à l'intérieur des encoches pour réaliser les bobines autour des dents du stator dans le cadre d'un bobinage de type concentrique.

Selon une réalisation, chaque bobine est formée par un nombre de spires compris entre 5 et 20.

Selon une réalisation, chaque bobine est formée par neuf spires.

En variante, chaque bobine est formée par 18 spires.

Selon une réalisation, ledit stator comporte six bobines.

Selon une réalisation, ledit bobinage est du type triphasé, chaque phase étant notamment réalisée par deux bobines diamétralement opposées.

Selon une réalisation, lesdites bobines sont connectées électriquement deux à deux en parallèle.

Selon une réalisation, lesdites bobines sont couplées en triangle. Un tel couplage permet de minimiser le nombre de connexions à réaliser.

Selon une réalisation, autour de chaque dent, un nombre de spires situées du côté de ladite culasse est supérieur à un nombre de spires situées du côté d'un axe dudit stator.

Selon une réalisation, dans une encoche, une portion de la bobine remplissant ladite encoche est formée par trois couches de spires. En variante, on pourrait réaliser deux couches de spires.

Selon une réalisation, un ratio entre une plus petite ouverture d'encoche mesurée entre deux pieds de dent adjacents, et un diamètre externe dudit stator est compris entre, 5% et 25%, notamment entre 5% et 15%. Cela permet d'optimiser les performances magnétiques de la machine électrique tout en facilitant l'insertion de l'aiguille de bobinage à l'intérieur des encoches pour réaliser les bobines autour des dents du stator.

Selon une réalisation, ledit corps de stator est composé d'une pluralité de feuilles de tôles superposées axialement les unes sur les autres.

Selon une réalisation, au moins une feuille comporte à sa surface un plot destiné à venir coopérer avec un creux d'une feuille adjacente, et en ce qu'un ratio entre un plus grand diamètre dudit plot et un diamètre externe dudit stator est compris entre 5% et 15%, notamment entre 2% et 10%. Un tel ratio permet de ne pas perturber le flux magnétique au stator tout en garantissant une bonne tenue mécanique du paquet de tôle d'un tel type de stator de dimensions réduites.

Selon une réalisation, ledit corps de stator comporte au moins un trou de fixation traversant débouchant du côté de chaque face d'extrémité axiale dudit corps de stator, et en ce qu'un ratio entre une première distance entre un axe dudit stator et un axe dudit trou de fixation et la moitié d'un diamètre externe dudit stator est compris entre 80% et 97%, notamment entre 85% et 95%. Cela permet ainsi d'obtenir un compris optimum entre une bonne tenue mécanique et les performances magnétiques de la machine électrique dans laquelle est monté le stator.

Selon une réalisation, ladite machine comporte un rotor muni d'aimants permanents enterrés par exemple au nombre de quatre.

Selon une réalisation, ledit corps de rotor présente une périphérie externe délimitée par une face cylindrique de diamètre externe compris entre 20 mm et 50 mm, notamment compris entre 24 mm et 34 mm, et de préférence de l'ordre de 28 mm.

Selon une réalisation, ladite machine présente un temps de réponse compris entre 100 ms et 600 ms, notamment compris entre 200 ms et 400 ms, par exemple étant de l'ordre de 250 ms pour passer de 0 ou 5000 à 70000 tours/min.

Selon une réalisation, des éléments de plaquage sont intercalés entre le corps de rotor et chaque aimant permanent.

L'invention a encore pour objet une machine électrique tournante comportant un stator tel que décrit précédemment et un rotor muni d'aimants permanents enterrés.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe d'un compresseur électrique comportant une machine électrique tournante selon la présente invention;
La figure 2 montre une vue en perspective du stator de la machine électrique tournante selon la présente invention;
La figure 3 est une vue de dessus du stator seul de la machine électrique tournante selon la présente invention;
La figure 4 est une vue de dessus du stator selon l'invention muni de spires pour la formation d'une portion de bobine occupant une demi-encoche;
La figure 5 montre une vue en coupe partielle illustrant la configuration d'une dent du stator selon la présente invention;
La figure 6 est une vue en coupe d'un fil utilisé pour la réalisation d'une bobine appartenant au bobinage du stator selon la présente invention.
La figure 7 montre une évolution du taux de remplissage (O1) en pourcents ainsi que l'inverse de l'inertie de la machine (O2) en fonction du ratio entre le diamètre d'une portion conductrice du fil de bobinage et le diamètre interne du stator;
La figure 8 est une vue en coupe illustrant un emboîtement entre les feuilles de tôles du stator dans le cas d'un assemblage par boutonnage;
La figure 9 montre une vue en perspective du rotor de la machine électrique tournante selon la présente invention;
La figure 10 est une vue en coupe transversale du rotor de la machine électrique tournante selon la présente invention.

Les éléments identiques, similaires, ou analogues conservent la même référence d'une figure à l'autre.

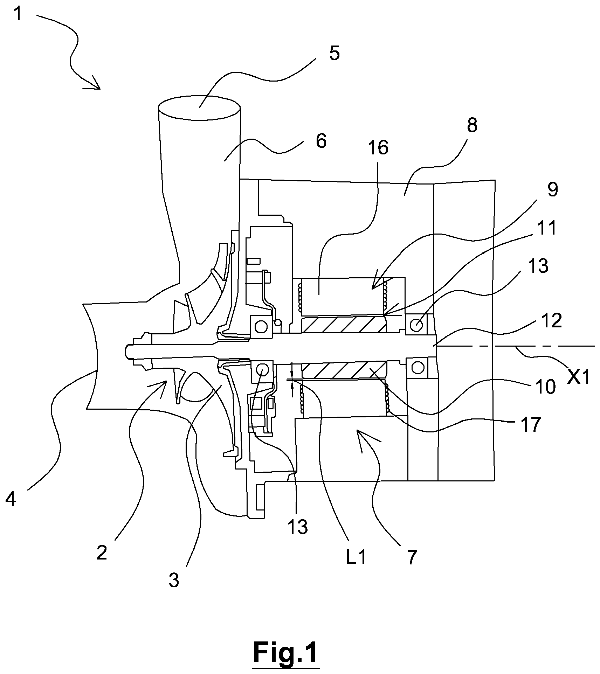

La figure 1 montre un compresseur 1 électrique, comportant une turbine 2 munie d'ailettes 3 apte à aspirer, via une entrée 4, de l'air non-comprimé issu d'une source d'air (non représentée) et à refouler de l'air comprimé via la sortie 5 après passage dans une volute référencée 6. La sortie 5 pourra être reliée à un répartiteur d'admission (non représenté) situé en amont du moteur thermique afin d'optimiser le remplissage des cylindres du moteur thermique. En l'occurrence, l'aspiration de l'air est réalisée suivant une direction axiale, c'est-à-dire suivant l'axe X1 de la turbine 2, et le refoulement est réalisé suivant une direction radiale perpendiculaire à l'axe X1 de la turbine 2. En variante, l'aspiration est radiale tandis que le refoulement est axial. Alternativement, l'aspiration et le refoulement sont réalisés suivant une même direction par rapport à l'axe de la turbine (axiale ou radiale).

A cet effet, la turbine 2 est entraînée par une machine électrique 7 montée à l'intérieur du carter 8. Cette machine électrique 7 comporte un stator 9, qui pourra être polyphasé, entourant un rotor 10 avec présence d'un entrefer 11. Ce stator 9 est monté dans le carter 8 configuré pour porter à rotation un arbre 12 par l'intermédiaire de roulements 13. L'arbre 12 est lié en rotation avec la turbine 2 ainsi qu'avec le rotor 10. Le stator 9 est de préférence monté dans le carter 8 par frettage.

Afin de minimiser l'inertie de la turbine 2 lors d'une demande d'accélération de la part du conducteur, la machine électrique 7 présente un temps de réponse court compris entre 100 ms et 600 ms, notamment compris entre 200 ms et 400 ms, par exemple étant de l'ordre de 250ms pour passer de 0 ou 5000 à 70000 tours/min. De préférence, la tension d'utilisation est de 12V. De préférence, la machine électrique 7 est apte à fournir un pic de courant, c'est-à-dire un courant délivré sur une durée continue inférieure à 3 secondes, compris entre 150 A et 300 A, notamment entre 180 A et 250 A.

En variante, la machine électrique 7 est apte à fonctionner en mode alternateur, ou est une machine électrique de type réversible.

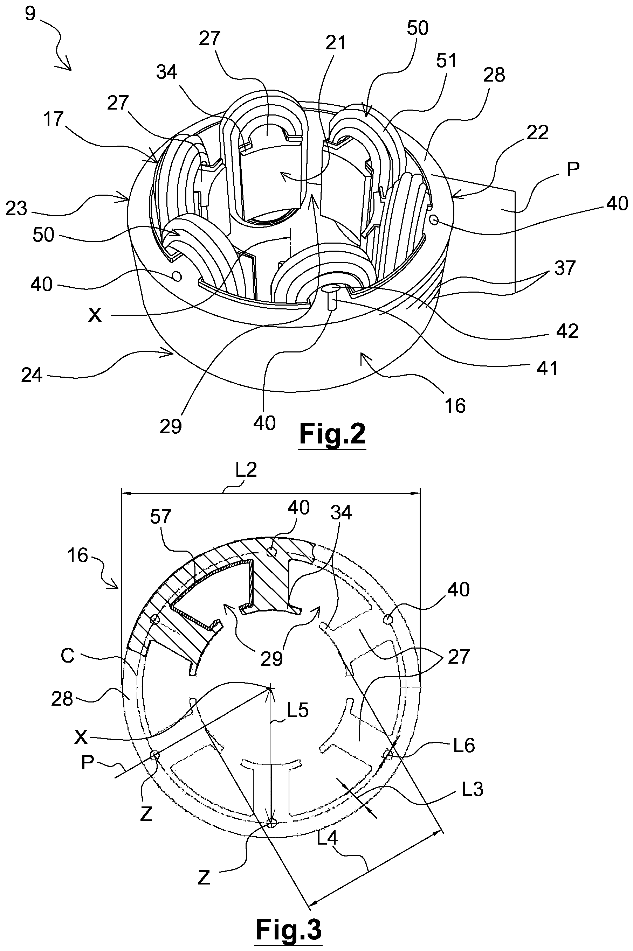

Comme on peut le voir sur la figure 2, le stator 9 comporte un corps 16 et un bobinage 17. Le corps de stator 16 a une forme cylindrique annulaire d'axe X et consiste en un empilement axial de tôles planes. Plus précisément, le corps de stator 16 est délimité radialement par une face cylindrique interne 21 et par une face cylindrique externe 22. Le corps 16 est par ailleurs délimité axialement par des faces d'extrémité 23 et 24.

Le corps 16 comporte des dents 27 réparties angulairement de manière régulière sur une circonférence interne d'une culasse 28. Ces dents 27 délimitent des encoches 29, de telle façon que chaque encoche 29 est délimitée par deux dents 27 successives. La culasse 28 correspond ainsi à la portion annulaire externe pleine du corps 16 qui s'étend entre le fond des encoches 29 et la périphérie externe du stator 9.

Les encoches 29 débouchent axialement dans les faces d'extrémité axiales 23, 24 du corps 16. Les encoches 29 sont également ouvertes radialement dans la face cylindrique interne du corps 16.

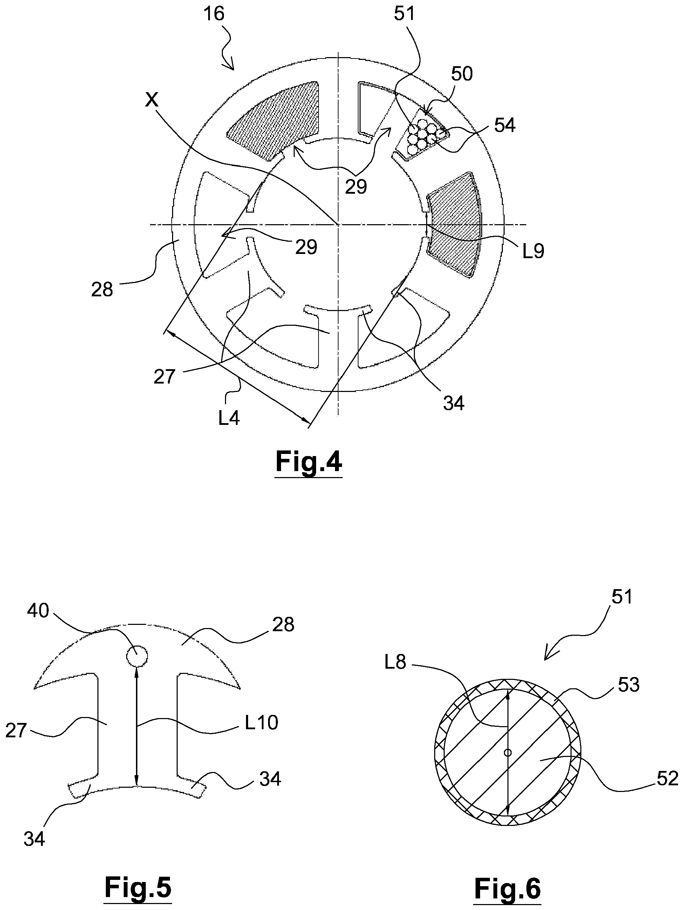

Comme cela est bien visible sur les figures 3 et 4, les dents 27 du stator 9 sont de préférence à bords parallèles, en sorte que les faces internes en vis-à-vis l'une de l'autre des encoches 29 sont inclinées l'une par rapport à l'autre. Les encoches 29 sont réparties angulairement de manière régulière autour de l'axe X.

De préférence, le stator 9 est muni de pieds de dents 34 du côté des extrémités libres des dents 27 (cf. figure 5). Chaque pied de dent 34 s'étend circonférentiellement de part et d'autre d'une dent 27 correspondante.

Le stator 9 est une pièce non segmentée en tôles feuilletées en matériau magnétique. En outre, les dents 27 viennent de matière avec la culasse 28. En variante, le stator 9 pourra toutefois être segmenté c'est-à-dire qu'il est réalisé à partir de plusieurs segments angulaires assemblés entre eux. Dans ce cas, la culasse 28 présente radialement une continuité de matière suivant sa circonférence et radialement sur toute son épaisseur. En variante, les dents 27 pourront être rapportées par rapport à la culasse 28 et fixées à la périphérie interne de la culasse par un système de type tenon-mortaise.

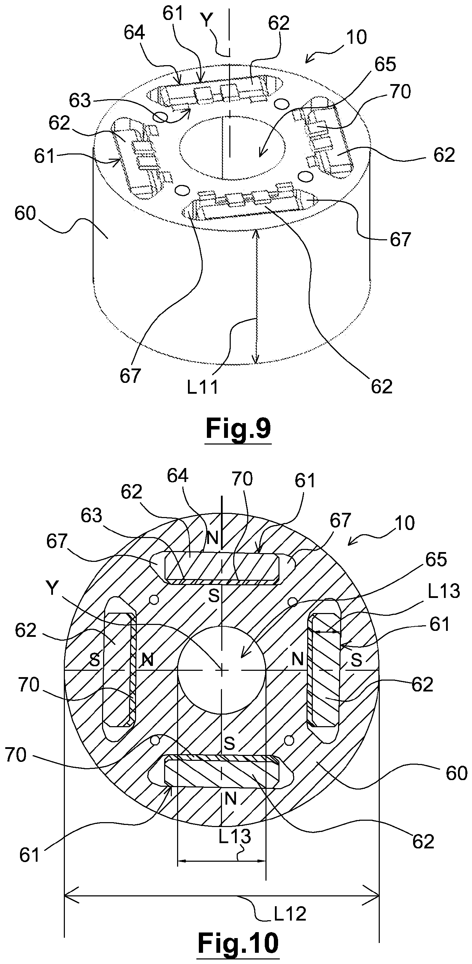

Avantageusement, un ratio entre une épaisseur radiale L1 de l'entrefer 11 et un diamètre externe L2 du stator 9 est compris entre 0.1% et 2%, notamment entre 0.2% et 1%. Ce ratio permet de maximiser le couple développé par ce type de machine pourvue d'un stator 9 de faibles dimensions. L'entrefer 11 est choisi en fonction d'une épaisseur L13 d'aimants permanents 62 du rotor 10 (cf. figure 10). Ainsi, un deuxième ratio entre une épaisseur de l'entrefer 11 et une épaisseur d'aimants L13 est compris entre 0.9 et 0.15.

En outre, afin d'optimiser le passage du flux magnétique dans le stator 9 tout en ayant une tenue mécanique efficace, un ratio entre une épaisseur L3 de la culasse 28 mesurée radialement et un diamètre interne L4 du stator 9 mesuré entre deux dents 27 diamétralement opposées est compris entre 9% et 20%, par exemple entre 10% et 20%, notamment entre 12% et 15%, et vaut de préférence environ 9% ou 13%.

En outre, un ratio entre le diamètre interne L4 et un diamètre externe L2 du stator 9 est compris entre 40% et 60%, et vaut de préférence de l'ordre de 51.5%. Cela permet d'optimiser l'espace bobinable des encoches 29 ainsi que l'inertie du rotor 10.

Comme on peut le voir sur la figure 2, le corps de stator 16 est formé de préférence par un empilement axial de feuilles de tôle 37 s'étendant chacune dans un plan radial perpendiculaire à l'axe X. Ce corps de stator 16 est réalisé en matière ferromagnétique. Les tôles 37 sont maintenues par des moyens de fixation 41 pour formation d'un ensemble manipulable et transportable. A cet effet, une pluralité de trous de fixation 40 sont réalisés dans le corps de stator 16 pour autoriser chacun le passage d'un moyen de fixation 41 des tôles du corps de stator 16. En l'occurrence, les trous de fixation 40 sont de préférence traversants, c'est-à-dire qu'ils débouchent axialement sur chacune des extrémités axiales 23, 24 du corps de stator 16, en sorte qu'il est possible de faire passer à l'intérieur de chaque trou de fixation 40 une tige 41 munie d'une tête ou non 42 à une de ses extrémités et dont l'autre extrémité ou les deux sera(ont) déformée(s) par exemple par un procédé de bouterollage afin d'assurer le maintien axial du paquet de tôles.

Avantageusement, un ratio entre une distance L5 entre l'axe X du stator 9 et un axe Z d'un trou de fixation 40 (cf. figure 3) et la moitié du diamètre externe L2 du stator 9 est compris entre 80% et 97%, notamment entre 85% et 95%. Ceci permet d'obtenir un compris optimum entre une bonne tenue mécanique et les performances magnétiques de la machine électrique 7 dans laquelle est monté le stator 9. L'axe Z de chaque trou de fixation 40 est compris dans un plan de symétrie P d'une dent 27 correspondante. Les axes Z des trous de fixation 40 sont également positionnés de préférence sur un même cercle C (cf. figure 3).

Le stator 9 comporte un nombre de trous de fixation 40 compris entre trois et le nombre de dents 27, ici égal à six. En outre, les trous de fixation 40 traversent la culasse 28, notamment en traversant uniquement la culasse 28, c'est-à-dire sans empiéter sur la dent 27 correspondante. Un ratio entre le diamètre maximum L6 de chaque trou de fixation 40 et le diamètre externe L2 du stator 9 est compris entre 2% et 10%.

En variante, la tige 41 est dépourvue de tête 42 et les deux extrémités sont alors déformées par un procédé de bouterollage. En variante, les trous de fixation 40 pourront présenter une section de forme carrée, rectangulaire, ou toute autre forme adaptée au passage des moyens de fixation 41.

En variante, les tôles pourront être maintenues entre elles par boutonnage, ou collage, ou soudure laser.

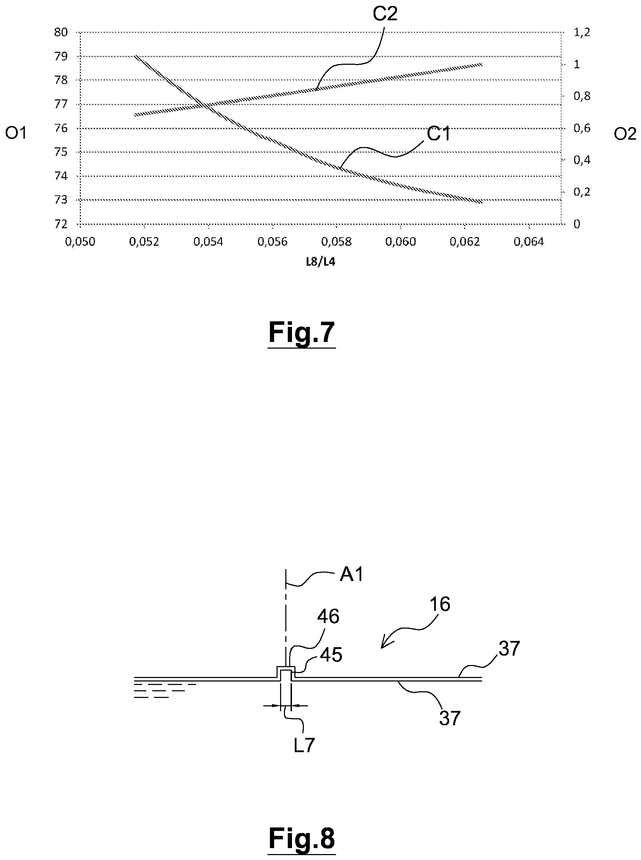

Dans le mode de réalisation de la figure 8, chaque feuille 37 comporte à sa surface un plot 45 destiné à venir coopérer avec un creux 46 d'une feuille adjacente. La dernière feuille est percée. Un ratio entre le plus grand diamètre L7 du plot 45 et un diamètre externe L2 du stator 9 est compris entre 5% et 15%, notamment entre 2% et 10%. Un tel ratio permet une bonne tenue mécanique du paquet de tôle d'un tel type de stator 9 de dimensions réduites, tout en limitant les perturbations magnétiques liées à la présence des plots 45. En outre, un tel ratio permet de faciliter la fabrication des feuilles 37 tout assurant un positionnement précis d'une feuille 37 par rapport à l'autre.

Chaque feuille de tôle 37 comporte au moins une face directement en contact avec une unique face d'une autre feuille 37. De préférence, le plus grand diamètre de chaque plot 45 et compris 0.5mm et 5mm et vaut de préférence 3mm. Le nombre de plots 45 par feuille 37 est compris entre 2 et le nombre de dents du stator 9. Sur une feuille de tôle 37, les plots 45 sont disposés sur une première face et les creux 46 sont disposés sur une deuxième face opposée à la première face. En outre, chaque creux 46 est axialement aligné avec un plot 45 correspondant suivant un axe référencé A1 sur la figure 8. Dans un exemple de réalisation, les plots 45 sur la feuille sont positionnés au milieu de chaque dent 27, et sur un même diamètre par exemple de l'ordre de 47mm. En variante, la culasse 28 est pleine et présente radialement une continuité de matière suivant sa circonférence et radialement sur toute son épaisseur.

Comme on peut le voir sur les figures 2 et 4, pour former le bobinage 17 du stator 9, plusieurs enroulements de phase sont formés par des bobines 50 enroulées autour des dents 27 du stator 9, ici au nombre de six. Chaque bobine 50 est formée à partir à partir d'un fil 51. Ce fil 51 montré en section sur la figure 6 est muni d'une portion conductrice 52, réalisée par exemple en cuivre ou en aluminium, recouverte d'une couche isolante 53, telle que de l'émail.

La figure 7 montre une évolution du taux de remplissage (courbe C1) ainsi que l'inverse de l'inertie de la machine (courbe C2) en fonction du ratio entre le diamètre L8 d'une portion conductrice dudit fil 51 et le diamètre interne L4 du stator 9. Le ratio est compris entre 3 et 10%, par exemple entre 5 et 10%, notamment entre 5 et 7%, par exemple entre 5,2% et 6,3%. De préférence, le ratio est sensiblement égal à 5,4%, ce qui correspond à l'intersection entre les deux courbes C1 et C2. Il est à noter que l'on fait varier le ratio avec un diamètre L8 figé de l'ordre de 1.5mm. En outre, les autres paramètres du stator et du rotor figés pour l'obtention des courbes sont compris dans les plages fournies dans l'exemple de réalisation indiqué ci-dessous.

Le diamètre L8 de la portion conductrice du fil 51 est de l'ordre de 1.5mm dans le cas où le stator comporte 9 spires. Avec la couche d'émail, le diamètre du fil est de 1,602mm. En variante, Le diamètre L8 de la portion conductrice du fil 51 est de l'ordre de 1.06mm dans le cas où le stator comporte 18 spires. Le choix du diamètre du fil 51 est un choix important pour assurer la faisabilité d'un bobinage de type concentrique. Par ailleurs, le choix du diamètre intérieur L4 du stator est guidé par la minimisation de l'inertie (ou la maximisation de 1/inertie qui est optimal lorsque ce ratio est proche de 1), ainsi que par la faisabilité du bobinage. En effet, plus le diamètre intérieur du stator 9 augmente, plus le diamètre extérieur rotor augmente, plus l'inertie augmente.

Suivant la méthode de calcul, le stator pourra ainsi présenter un taux de remplissage d'encoche de l'ordre de:
- 50 % lorsqu'il est calculé suivant une première méthode de calcul dans laquelle on détermine un rapport entre la surface totale cumulée (en section) du cuivre dans l'encoche avec assimilation de l'émail en tant que cuivre et la surface totale de l'encoche (avec déduction de l'espace occupé par l'isolant et en partant du principe que le fil est de section carré), ou
- 73% lorsqu'il est calculé suivant une deuxième méthode de calcul correspondant à la première méthode sauf que l'on déduit de la surface de section d'encoche, la surface de la section pour le passage de l'aiguille de bobinage. Le résultat fourni par cette deuxième méthode est un taux de remplissage dit "utile".

Le tableau ci-dessous détaille le calcul du taux de remplissage avec les deux méthodes précitées:
- Première méthode:

| | | |
|---|---|---|
| | Surface de fil dans l'encoche (diamètre au carré x nbr fils x 2)= | 46.195272 |
| Taux de remplissage total | Surface de fil dans l'encoche/surface de l'encoche isolée | 49.82932465 |

- Deuxième méthode:

| | | |
|---|---|---|
| | Surface de fil dans l'encoche (diamètre au carré x nbr fils)= | 23.097636 |
| Taux de remplissage utile | Surface de fil dans l'encoche/surface de l'encoche isolée utile | 73.32582857 |

En outre, de préférence, un ratio entre une plus petite ouverture d'encoche L9 mesurée entre deux pieds de dent 34 adjacents (cf. figure 4), et le diamètre externe L2 du stator 9 est compris entre 5% et 25%, notamment entre 5% et 15%. On facilite ainsi l'insertion de l'aiguille de bobinage à l'intérieur de l'encoche 29.

Autour de chaque dent 27, le nombre de spires 54 situées du côté de la culasse 28 est supérieur ou égal au nombre de spires 54 situées du côté de l'axe X du stator 9. On rappelle ici qu'une spire 54 correspond à un tour du fil autour de la dent 27. Dans une encoche 29 donnée, la portion de la bobine 50 remplissant l'encoche 29 est formée par exemple, de trois couches de spires 54. Dans chaque couche, les spires 54 sont positionnées côte à côte. Chaque bobine 50 est de préférence formée par neuf spires 54.

En l'occurrence, le bobinage 17 est du type triphasé, chaque phase étant notamment réalisée par deux bobines 50 diamétralement opposées. Les bobines 50 diamétralement opposées sont connectées électriquement deux à deux en parallèle. Les phases formées chacune par deux bobines 50 en parallèle sont de préférence connectées en triangle. Ce type de bobinage permet de minimiser le nombre de connexion à réaliser. En outre, il est à noter qu'à faible tension, le choix du nombre de fil et du couplage des bobines 50 est très contraignant, dans la mesure où à une spire 54 près il peut devenir impossible d'atteindre les performances requises notamment en termes d'accélération de la machine.

Dans l'invention, la configuration à neuf spires 54 en triangle permet de remplir les exigences techniques du compresseur alors qu'un couplage correspondant en étoile ne fonctionnerait pas puisqu'il serait nécessaire de réaliser 9/racine(3)=5.2 spires 54 avec un diamètre de fil égal à 1.5^{∗}racine(racine(3))=1.97mm, ce qui correspond à un fil trop difficile à bobiner avec un taux de remplissage irréalisable. Par ailleurs, si l'on réalisait plus de spires 54, le taux de remplissage augmenterait, mais le couloir de bobinage serait perdu de telle façon qu'il ne serait plus possible d'utiliser un stator 9 non segmenté.

En variante, le couplage pourrait être réalisé en triangle, bobines en série, ou en étoile avec des bobines soit en série soit en parallèle.

Afin d'optimiser les performances magnétiques d'un tel bobinage 17 réalisé in situ sur le stator 9, on sélectionne un ratio entre le diamètre L8 de la portion conductrice 52 du fil 51, exprimé en mm, et un nombre de spires 54 de chaque bobine 50 compris entre 5% et 25%, notamment entre 10% et 20%. Ainsi, pour un diamètre L8 de l'ordre de 1.5mm et pour 9 spires par bobine, le ratio est de l'ordre de 16.7%.

Dans le mode de réalisation particulier de la figure 3, la protection entre le paquet de tôles 16 et le fil de bobinage 51 est assurée par un isolant surmoulé 57 sur les faces internes des encoches 29. Pour faciliter la lisibilité de la figure, l'isolant surmoulé 57 a été représentée uniquement sur une partie du corps de stator 13. La face du pied de dent 34 tournée vers l'axe X du stator 9, c'est-à-dire la face du pied de dent 34 en contact avec l'entrefer 11 s'étendant suivant une portion de cylindre, est dépourvue d'isolant 57. On évite ainsi de perturber le passage du flux dans l'entrefer 11.

De préférence, l'isolant surmoulé 57 recouvre les faces d'extrémité axiale des dents 27, et/ou les faces d'extrémité axiale de la culasse 28. Autrement dit, l'isolant surmoulé 57 pourra également recouvrir les faces d'extrémité axiale 23, 24 du corps de stator 16.

Par rapport à l'utilisation de papier isolant comme cela est le cas sur la figure 2, une telle configuration permet de faciliter la mise en place de l'isolant d'encoche, particulièrement pour des stators 9 de faible diamètre.

Dans un exemple de réalisation, l'entrefer L1 est de l'ordre de 0.3mm. Le diamètre externe L2 du stator 9 est compris entre 40mm et 60mm, et vaut de préférence 52mm. Le diamètre interne L4 du stator 9 est compris entre 15mm et 35mm, notamment entre 20mm et 30mm, par exemple de l'ordre de 26.8mm. Avantageusement, le fil 51 comprend une portion conductrice 52 de diamètre L8 compris entre 1mm et 2mm et vaut de préférence 1.06mm ou 1.5mm comme indiqué précédemment; tandis que chaque bobine 50 comporte un nombre de spires 54 compris entre 5 et 20, notamment égal à 9. L'épaisseur L3 de la culasse 28 pourra avantageusement être comprise entre 2mm et 5mm, et valoir de préférence 3.5mm. En outre, une longueur radiale L10 de chaque dent 27 (cf. figure 5) est comprise entre 5mm et 15mm. La plus petite ouverture d'encoche L9 mesurée entre deux pieds de dent 34 adjacents est de l'ordre de 4mm. Les trous de fixation 40 pourront présenter un diamètre L6 compris entre 0.6mm et 3mm, et valant par exemple 3mm; tandis que la distance L5 entre l'axe X du stator 9 et un centre d'un trou de fixation 40 est de l'ordre de 47mm.

Par ailleurs, le rotor 10 d'axe de rotation Y montré en détails sur les figures 9 et 10 est à aimants permanents. Le corps de rotor 60 comporte un paquet de tôle constitué par un empilage axial de tôles. Le corps de rotor 60 peut être lié en rotation à l'arbre 12 de différentes manières, par exemple par emmanchement en force de l'arbre 12 cannelé à l'intérieur de l'ouverture centrale 65 du rotor 10, ou à l'aide d'un dispositif à clavette.

De préférence, le ratio entre le diamètre externe L2 du stator 9 et une longueur axiale L11 du rotor 10 est compris entre 3 et 4, et vaut de préférence 3.25. Ce ratio permet de diminuer l'inertie du rotor 10 et donc de diminuer le temps nécessaire pour atteindre une vitesse de rotation élevée correspondant par exemple à une vitesse de fonctionnement d'un compresseur électrique. Avantageusement, le ratio entre le diamètre externe L12 du rotor 10 et la longueur L11 du rotor 10 est compris entre 1.1 et 1.8, et vaut par exemple environ 1.6.

Dans un exemple de réalisation, le rotor 10 présente par exemple une longueur axiale L11 comprise entre 10mm et 20mm et valant de préférence 16mm, un diamètre externe L12 compris entre 20 mm et 50 mm, notamment compris entre 24mm et 34mm, et de préférence de l'ordre de 26mm, et un diamètre interne L13 de l'ordre de 10mm.

Le rotor 10 de type à aimants enterrés 62 comporte une pluralité de cavités 61 dans chacune desquelles est logé au moins un aimant permanent 62. Les aimants 62 sont à aimantation radiale, c'est-à-dire que les deux faces parallèles 63, 64 l'une par rapport à l'autre ayant une orientation orthoradiale sont magnétisées de manière à pouvoir générer un flux magnétique suivant une orientation radiale par rapport à l'axe Y.

Comme cela est bien visible sur la figure 10 où les lettres N et S correspondent respectivement aux pôles Nord et Sud, les aimants 62 situés dans deux cavités 61 consécutives sont de polarités alternées.

Dans le cas présent, les aimants permanents 62 ont une forme de parallélépipède rectangle dont les angles sont légèrement biseautés. Les faces internes et externes 63, 64 de chaque aimant 62 sont en l'occurrence planes. En variante, la face externe 64 de chaque aimant 62 est courbée, tandis que la face interne 63 de l'aimant 62 est plate, ou inversement. Alternativement, les deux faces 63, 64 sont courbées dans le même sens, en sorte que chaque aimant 62 présente globalement une forme de tuile.

Par ailleurs, les aimants 62 ne remplissent pas complètement les cavités 61, de telle façon qu'il existe deux espaces vides 67 de part et d'autre d'un aimant 62 donné suivant une direction orthoradiale. Le volume d'air délimité par l'ensemble des espaces 67 du rotor permet de réduire l'inertie du rotor 10 et d'optimiser le flux magnétique.

Les aimants 62 sont de préférence réalisés en terre rare afin de maximiser la puissance magnétique de la machine 7. En variante, ils pourront toutefois être réalisés en ferrite selon les applications et la puissance recherchée de la machine électrique 7. Alternativement, les aimants 62 peuvent être de nuances différentes pour réduire les coûts.

En outre, des éléments de plaquage 70 sont intercalés entre le corps de rotor 60 et chaque aimant 62, pour assurer le maintien de chaque aimant permanent 62 à l'intérieur de la cavité 61 correspondante. Les éléments de plaquage 70 sont positionnés du côté de l'axe Y du rotor 10. En variante, les éléments de plaquage 70 pourraient être positionnés du côté de l'entrefer 11 de la machine électrique.

Chaque élément de plaquage 70 est constitué par une lame ressort incurvée déformable élastiquement. En variante, l'élément de plaquage 70 est constitué par une goupille, un ressort à spirales, ou un ressort monté comprimé par écrasement suivant sa hauteur entre le corps de rotor 60 et les aimants permanents 62. Pour plus de détails sur la configuration du rotor 10, on pourra se référer à la demande française n°15 54136 déposée le 7 mai 2015 par la Demanderesse.

Bien entendu, la description qui précède a été donnée à titre d'exemple uniquement et ne limite pas le domaine de l'invention défini par les revendications.

## Revendications

1. Stator (9) de machine électrique tournante, notamment destinée à un compresseur électrique (1) pour véhicule automobile, ledit stator (9) comportant un corps (16) ayant :
- une culasse (28),
- une pluralité de dents (27) réparties angulairement sur une périphérie interne de ladite culasse (28), deux dents (27) adjacentes définissant entre elles une encoche (29), et
- un bobinage (17) comportant une pluralité de bobines (50), chaque bobine (50) étant formée par un fil (51) enroulé autour d'une dent (27), **caractérisé en ce qu'**un ratio entre un diamètre (L8) d'une portion conductrice dudit fil (51) et un diamètre interne (L4) dudit stator (9), est compris entre 5 et 10%, notamment entre 5 et 7%.

2. Stator selon la revendication 1, **caractérisé en ce que** ledit ratio est sensiblement égal à 5,4%.

3. Stator selon la revendication 1 ou 2, **caractérisé en ce que** ledit diamètre (L8) de ladite portion conductrice dudit fil (51) est compris entre 1mm et 2mm.

4. Stator selon l'une quelconque des revendications 1 à 3, **caractérisé en ce que** ledit diamètre interne (L4) dudit stator (9) est de l'ordre de 26.8mm.

5. Stator selon l'une quelconque des revendications 1 à 4, **caractérisé en ce que** chaque encoche (29) présente un taux de remplissage de l'ordre de:
- 50% lorsque ledit taux est calculé suivant une première méthode de calcul dans laquelle on détermine un rapport entre la surface totale cumulée de conducteur y compris sa couche isolant et une surface totale de l'encoche (29) avec déduction d'un espace occupé par un isolant d'encoche, ou
- 73% lorsque ledit taux est calculé suivant une deuxième méthode de calcul correspondant à la première méthode sauf que l'on déduit de la surface de section d'encoche, la surface d'une section pour le passage d'une aiguille de bobinage.

6. Stator selon l'une quelconque des revendications 1 à 5, **caractérisé en ce que** ledit bobinage (17) est du type « in situ ».

7. Stator selon l'une quelconque des revendications 1 à 6, **caractérisé en ce qu'**un ratio entre un diamètre (L8) d'une portion conductrice dudit fil (51) non émaillé, exprimé en mm, et un nombre de spires (54) de chaque bobine (50) est compris entre 5% et 25 %, notamment entre 10% et 20%.

8. Stator selon l'une quelconque des revendications 1 à 7, **caractérisé en ce que** chaque bobine (50) est formée par un nombre de spires (54) compris entre 5 et 20, par exemple égal à 9.

9. Stator selon l'une quelconque des revendications 1 à 8, **caractérisé en ce qu'**il comporte six bobines (50).

10. Stator selon l'une quelconque des revendications 1 à 9, **caractérisé en ce que** ledit bobinage (17) est du type triphasé, chaque phase étant notamment réalisée par deux bobines (50) diamétralement opposées.

11. Stator selon l'une quelconque des revendications 1 à 10, **caractérisé en ce que** lesdites bobines (50) sont connectées électriquement deux à deux en parallèle.

12. Stator selon l'une quelconque des revendications 1 à 11, **caractérisé en ce que** lesdites bobines (50) sont couplées en triangle.

13. Stator selon l'une quelconque des revendications 1 à 12, **caractérisé en ce que**, autour de chaque dent (27), un nombre de spires (54) situées du côté de ladite culasse (28) est supérieur à un nombre de spires (54) situées du côté d'un axe (X) dudit stator (9).

14. Stator selon l'une quelconque des revendications 1 à 13, **caractérisé en ce que**, dans une encoche (29), une portion de la bobine (50) remplissant ladite encoche (29) est formée par trois couches de spires (54).

15. Stator selon l'une quelconque des revendications 1 à 14, **caractérisé en ce qu'**un ratio entre une plus petite ouverture d'encoche mesurée entre deux pieds de dent (34) adjacents, et un diamètre externe (L2) dudit stator (9) est compris entre, 5% et 25%, notamment entre 5% et 15%.

16. Machine électrique tournante (7) comportant un stator (9) selon l'une quelconque des revendications précédentes et un rotor (10) muni d'aimants permanents (62) enterrés.

## Patentansprüche

1. Stator (9) einer drehenden elektrischen Maschine, die insbesondere für einen elektrischen Kompressor (1) für ein Kraftfahrzeug bestimmt ist, wobei der Stator (9) einen Körper (16) umfasst mit:
- einem Joch (28),
- einer Vielzahl von Zähnen (27), die winklig über einen Innenumfang des Jochs (28) verteilt sind, wobei zwei benachbarte Zähne (27) zwischen sich eine Nut (29) definieren, und
- einer Wicklung (17), die eine Vielzahl von Spulen (50) umfasst, wobei jede Spule (50) aus einem Draht (51) gebildet wird, der um einen Zahn (27) herum gewickelt ist, **dadurch gekennzeichnet, dass** eine Verhältniszahl zwischen einem Durchmesser (L8) eines leitenden Abschnitts des Drahts (51) und einem Innendurchmesser (L4) des Stators (9) zwischen 5 und 10 %, insbesondere zwischen 5 und 7 % beträgt.

2. Stator nach Anspruch 1, **dadurch gekennzeichnet, dass** die Verhältniszahl im Wesentlichen 5,4 % beträgt.

3. Stator nach Anspruch 1 oder 2, **dadurch gekennzeichnet, dass** der Durchmesser (L8) des leitenden Abschnitts des Drahts (51) zwischen 1 mm und 2 mm beträgt.

4. Stator nach einem der Ansprüche 1 bis 3, **dadurch gekennzeichnet, dass** der Innendurchmesser (L4) des Stators (9) in der Größenordnung von 26.8 mm liegt.

5. Stator nach einem der Ansprüche 1 bis 4, **dadurch gekennzeichnet, dass** jede Nut (29) einen Füllgrad aufweist in der Größenordnung von:
- 50 %, wenn der Grad nach einer ersten Rechenmethode berechnet wird, bei der man ein Verhältnis zwischen der kumulierten Leitergesamtfläche einschließlich seiner Isolierschicht und einer Gesamtfläche der Nut (29) unter Abzug eines von einem Nutisolator eingenommenen Raums bestimmt, oder
- 73 %, wenn der Grad nach einer zweiten Rechenmethode berechnet wird, die der ersten Methode entspricht, außer dass man von der Nutquerschnittsfläche die Fläche eines Querschnitts zum Durchführen einer Wickelnadel abzieht.

6. Stator nach einem der Ansprüche 1 bis 5, **dadurch gekennzeichnet, dass** die Wicklung (17) vom "In-situ"-Typ ist.

7. Stator nach einem der Ansprüche 1 bis 6, **dadurch gekennzeichnet, dass** eine Verhältniszahl zwischen einem Durchmesser (L8) eines leitenden Abschnitts des nicht emaillierten Drahts (51), ausgedrückt in mm, und einer Anzahl von Windungen (54) jeder Spule (50) zwischen 5 % und 25 %, insbesondere zwischen 10 % und 20 % beträgt.

8. Stator nach einem der Ansprüche 1 bis 7, **dadurch gekennzeichnet, dass** jede Spule (50) aus einer Anzahl von Windungen (54) zwischen 5 und 20 gebildet wird, die beispielsweise 9 beträgt.

9. Stator nach einem der Ansprüche 1 bis 8, **dadurch gekennzeichnet, dass** er sechs Spulen (50) umfasst.

10. Stator nach einem der Ansprüche 1 bis 9, **dadurch gekennzeichnet, dass** die Wicklung (17) vom dreiphasigen Typ ist, wobei jede Phase insbesondere aus zwei diametral entgegengesetzten Spulen (50) ausgeführt wird.

11. Stator nach einem der Ansprüche 1 bis 10, **dadurch gekennzeichnet, dass** die Spulen (50) elektrisch paarweise parallel geschaltet sind.

12. Stator nach einem der Ansprüche 1 bis 11, **dadurch gekennzeichnet, dass** die Spulen (50) in Dreieckschaltung geschaltet sind.

13. Stator nach einem der Ansprüche 1 bis 12, **dadurch gekennzeichnet, dass** um jeden Zahn (27) herum eine Anzahl von auf Seiten des Jochs (28) gelegenen Windungen (54) größer als eine Anzahl von auf Seiten einer Achse (X) des Stators (9) gelegenen Windungen (54) ist.

14. Stator nach einem der Ansprüche 1 bis 13, **dadurch gekennzeichnet, dass** in einer Nut (29) ein Abschnitt der Spule (50), die die Nut (29) füllt, aus drei Lagen von Windungen (54) gebildet wird.

15. Stator nach einem der Ansprüche 1 bis 14, **dadurch gekennzeichnet, dass** eine Verhältniszahl zwischen einer kleinsten zwischen zwei benachbarten Zahnfüßen (34) gemessenen Nutöffnung und einem Außendurchmesser (L2) des Stators (9) zwischen 5 % und 25 %, insbesondere zwischen 5 % und 15 % beträgt.

16. Drehende elektrische Maschine (7), umfassend einen Stator (9) nach einem der vorhergehenden Ansprüche und einen Rotor (10), der mit vergrabenen Permanentmagneten (62) versehen ist.

## Claims

1. Stator (9) of a rotating electrical machine, intended in particular for an electrical compressor (1) for a motor vehicle, said stator (9) comprising a body (16) having:
- a yoke frame (28),
- a plurality of teeth (27) distributed angularly on an internal periphery of said yoke frame (28), two adjacent teeth (27) defining between them a notch (29), and
- a winding (17) comprising a plurality of coils (50), each coil (50) being formed by a wire (51) wound around a tooth (27),
**characterized in that** a ratio between a diameter (L8) of a conductive portion of said wire (51) and an internal diameter (L4) of said stator (9), is between 5 and 10%,
notably between 5 and 7%.

2. Stator according to Claim 1, **characterized in that** said ratio is substantially equal to 5.4%.

3. Stator according to Claim 1 or 2, **characterized in that** said diameter (L8) of said conductive portion of said wire (51) is between 1 mm and 2 mm.

4. Stator according to any one of Claims 1 to 3, **characterized in that** said internal diameter (L4) of said stator (9) is of the order of 26.8 mm.

5. Stator according to any one of Claims 1 to 4, **characterized in that** each notch (29) has a filling ratio of the order of:
- 50% when said ratio is calculated according to a first calculation method in which a ratio is determined between the combined total conductor surface including its insulating layer and a total surface of the notch (29) with deduction of a space occupied by a notch insulation, or
- 73% when said ratio is calculated according to a second calculation method corresponding to the first method, except that the surface of a section for the passage of a winding needle is deducted from the notch section surface.

6. Stator according to any one of Claims 1 to 5, **characterized in that** said winding (17) is of the "in situ" type.

7. Stator according to any one of Claims 1 to 6, **characterized in that** a ratio between a diameter (L8) of a conductive portion of said wire (51) that is not enamelled, expressed in mm, and a number of turns (54) of each coil (50) is between 5% and 25%, notably between 10% and 20%.

8. Stator according to any one of Claims 1 to 7, **characterized in that** each coil (50) is formed by a number of turns (54) of between 5 and 20, for example equal to 9.

9. Stator according to any one of Claims 1 to 8, **characterized in that** it comprises six coils (50).

10. Stator according to any one of Claims 1 to 9, **characterized in that** said winding (17) is of the three-phase type, each phase being notably produced by two diametrically opposing coils (50).

11. Stator according to any one of Claims 1 to 10, **characterized in that** said coils (50) are electrically connected pairwise in parallel.

12. Stator according to any one of Claims 1 to 11, **characterized in that** said coils (50) are coupled in delta configuration.

13. Stator according to any one of Claims 1 to 12, **characterized in that**, around each tooth (27), a number of turns (54) situated on the side of said yoke frame (28) is greater than a number of turns (54) situated on the side of an axis (X) of said stator (9).

14. Stator according to any one of Claims 1 to 13, **characterized in that**, in a notch (29), a portion of the coil (50) filling said notch (29) is formed by three layers of turns (54).

15. Stator according to any one of Claims 1 to 14, **characterized in that** a ratio between the smallest notch aperture measured between two adjacent tooth feet (34), and an outer diameter (L2) of said stator (9) is between 5% and 25%, notably between 5% and 15%.

16. Rotating electrical machine (7) comprising a stator (9) according to any one of the preceding claims and a rotor (10) provided with buried permanent magnets (62) .
